# FASCICULE DE BREVET EUROPEEN

(11) **EP 0 448 425 B1**
(45) Date de publication et mention de la délivrance du brevet: **05.06.1996**
(21) Numéro de dépôt: 91400428.8
(22) Date de dépôt: 18.02.1991
(51) Int. Cl.: C08L 95/00, C10C 3/02, C08J 11/06

(54) **Procédé de production de compositions bitumineuses par extrusion**
Verfahren zur Herstellung von bituminösen Zusammensetzungen durch Extrusion
Method of producing bituminous compositions by extrusion

(30) Priorité: 21.02.1990 FR 9002138
(43) Date de publication de la demande: 25.09.1991
(73) Titulaire: INSTITUT FRANCAIS DU PETROLE, F-92502 Rueil-Malmaison (FR)
(72) Inventeur: Dawans, François, F-78380 Bougival (FR)

(56) Documents cités:
- GB-A- 1 053 757
- GB-A- 2 072 683
- US-A- 3 484 507

## Description

Les polymères sont couramment utilisés comme additifs dans les asphaltes et bitumes routiers ou industriels, soit pour améliorer leurs propriétés de mise en oeuvre en modifiant les propriétés rhéologiques à chaud, soit pour améliorer leurs propriétés physicochimiques (fragilité à froid, tenacité, flexibilité, stabilité, susceptibilité thermique, résistance mécanique, aux chocs, aux vibrations, à l'abrasion...).

En général, les polymères utilisés sont des thermoplastiques (polymères ou copolymères d'oléfines), des caoutchoucs et, en particulier, des élastomères thermoplastiques (copolymères multiséquencés de dioléfines et de styrène), ou, dans une moindre mesure, des résines thermodurcissables (polyuréthanes, époxy, phénol-formol). Selon l'art antérieur, ces polymères peuvent être utilisés seuls ou en mélanges. Par exemple, on a proposé de recycler, comme additifs dans les bitumes, des déchets de fabrication (cires de polyéthylène, polypropylène atactique, alcool polyvinylique, poudrettes de caoutchoucs vulcanisés...) ou des déchets plastiques provenant des ordures ménagères, et plus particulièrement, des emballages plastiques. Dans ce dernier cas, les mélanges de polymères contiennent essentiellement des polyoléfines, du polychlorure de vinyle, du polystyrène et du polyéthylène téréphthalate.

Selon ces techniques antérieures, les polymères sont ajoutés, en petites quantités (en général de 2 à 10 pourcent en poids) dans les bitumes, sous la forme de mélanges "simples" n'impliquant pas d'interaction ou de réaction chimique entre les constituants, ou sous la forme de mélanges "complexes" impliquant une interaction ou une réaction chimique entre le polymère et certains constituants du bitume (asphaltènes, maltènes, résines...), éventuellement en la présence d'un troisième constituant (catalyseur, réactif). Le plus souvent, les polymères sont dispersés à l'état solide ou fondu dans un excès de bitume préalablement chauffé, et, après agitation, les mélanges sont utilisés tels quels, à l'état fondu, ou refroidis à l'état solide, et éventuellement broyés ou granulés.

Il est possible de procéder par extrusion comme dans le brevet US 3,484,507 publié le 16/12/1969, qui décrit l'incorporation aux bitumes de polymères ou copolymères d'oléfines. Certains procédés pour la production d'un mélange, à l'état fondu, de bitumes routiers additionnés de polymères d'oléfines, recommandent l'addition d'au moins 5 à 30 pourcent en poids de particules minérales qui accélèrent la dissolution du polymère dans le bitume (voir, par exemple, le brevet US 3336252 publié le 15.8.1967). Le brevet US 4028293 publié le 7.6.1977 revendique la fabrication d'un matériau bitumé, utilisé notamment dans le domaine routier et la construction, et obtenu par réaction à haute température (au moins à 180°C) d'un composé minéral tel que du sable ou des graviers avec un polymère ou un mélange de polymères provenant de déchets domestiques ou ménagers. Le mélange résultant est ensuite ajouté, à chaud, dans du bitume et refroidi. Un inconvénient majeur de cette méthode est le coût final de l'opération qui nécessite un préchauffage à haute température d'une quantité importante de matière minérale avant l'addition du ou des polymère(s).

La présente invention concerne un procédé simplifié et économique pour le recyclage de déchets polymères dans les bitumes routiers ou industriels. Ce procédé convient particulièrement bien pour le recyclage de "stériles d'automobiles", c'est-à-dire des déchets plastiques provenant de la casse des automobiles, pouvant contenir éventuellement d'autres déchets polymères, en proportion mineure, par exemple provenant de la casse d'appareils électroménagers.

Le nom générique de "stériles d'automobiles" ou de "RBA" (résidus ou rebuts du broyage d'automobiles) désigne en fait l'ensemble des matériaux minéraux et organiques issus du broyage ou du déchiquetage en majorité de carcasses d'automobiles et, dans une moindre mesure, d'appareils électroménagers et de déchets industriels, et obtenus après la séparation des principaux matériaux métalliques, par exemple, à l'aide de tris magnétiques, par gravitation ou hydrocyclones, par flottation ou manuels. Ces matériaux métalliques récupérés sont couramment recyclés comme matières premières dans l'industrie métallurgique. Par contre, le recyclage des déchets "stériles" ou non-métalliques pose actuellement un problème majeur à cause de l'hétérogénéité du matériau. Il s'agit, en effet, d'un mélange de composition variable et constitué de particules minérales non-métalliques et de divers polymères tels que des expansés ou mousses, des caoutchoucs vulcanisés, des fibres synthétiques, des thermoplastiques et des résines thermodurcies.

Compte tenu de la quantité croissante de matériaux polymères employés lors de la construction des véhicules et des appareils électroménagers, il est devenu nécessaire de trouver de nouveaux moyens pour se débarrasser de ces matériaux "stériles", qui soient satisfaisants, à la fois sur le plan économique et sur le plan écologique, pour la protection de l'environnement. On a déjà proposé de faire disparaitre la majorité des "stériles d'automobiles" par l'incinération, comme dans le cas des ordures ménagères. Si la construction d'usines spécifiques d'incinération pour les "stériles d'automobiles" est possible au niveau technique, elle ne constitue pas actuellement la solution la plus satisfaisante d'un point de vue énergétique et sur le plan financier, compte tenu des sécurités écologiques à assurer notamment pour le dépoussiérage des fumées de combustion et la rétention des émanations de gaz toxiques ou corrosifs. Comme dans le cas des déchets plastiques provenant des emballages et des ordures ménagères, on a également envisagé le recyclage des "stériles d'automobiles" comme matières premières de seconde génération, utilisées seules ou en mélanges avec des matériaux "neufs" de première génération. Néanmoins, étant donné leur composition plus hétérogène, les emplois des "stériles d'automobiles" comme matériaux recyclés sont restés jusqu'à présent très limités et ils ne permettent pas d'envisager une application suffisamment importante pour se débarrasser de quantités croissantes de "stériles". Par conséquent, la plupart des "stériles d'automobiles" sont actuellement déversés dans des décharges protégées, ce qui implique des coûts de stockage de plus en plus élevés et ce qui constitue, malgré toutes les précautions prises, une solution peu satisfaisante pour la protection de l'environnement.

C'est la raison pour laquelle, l'emploi, selon l'invention, de "stériles d'automobiles" pour améliorer les propriétés des bitumes ou asphaltes routiers et industriels constitue un moyen utile et avantageux de recyclage, du moins si l'on dispose d'une technique simple et fiable pour la réalisation des mélanges. Contrairement aux procédés décrits dans l'art antérieur et limités essentiellement au recyclage de déchets plastiques ménagers dans les bitumes, le procédé amélioré selon la présente invention, permet la mise en oeuvre de mélanges plus hétérogènes et complexes de polymères, tels que les "stériles d'automobiles" ou "RBA".

Le bitume (asphalte) utilisé selon la présente invention est un constituant naturel des huiles minérales et des pétroles bruts; il est obtenu par désasphaltage, par exemple par précipitation au propane, ou par distillation de produits de raffinage (pitch) et/ou de craquage de produits pétroliers. Il peut également être obtenu à partir de goudrons issus du charbon.

Sans sortir du cadre de l'invention, on peut utiliser également un bitume fluxé, par exemple, à l'aide de distillats ou résidus aromatiques ou encore un bitume oxydé ou soufflé à l'air.

La principale originalité de la présente invention consiste à valoriser des mélanges complexes de polymères organiques produits lors du déchiquetage et broyage principalement d'automobiles et, dans une moindre mesure, d'appareils électroménagers et de déchets industriels, en les ajoutant aux liants bitumés ou asphaltiques et en améliorant certaines propriétés en vue notamment d'emplois dans les enrobés de matériaux solides tels que les graviers, les enduits ou les revêtements, en particulier dans le domaine routier, la construction, les travaux publics et les équipements spéciaux.

Dans ce qui suit, on décrira l'invention en relation avec les stériles d'automobiles mais l'invention s'applique à d'autres résidus comme expliqué ci-dessus.

Pour la réutilisation des déchets polymériques provenant notamment du déchiquetage et du broyage d'automobiles ou d'appareils ménagers et comprenant notamment des polymères expansés, des mousses, des caoutchoucs vulcanisés, des fibres synthétiques, des polymères thermoplastiques et des résines thermodurcies, le procédé de l'invention peut être défini, d'une manière générale en ce que l'on incorpore lesdits déchets polymériques à des compositions bitumineuses en réalisant les étapes suivantes :
- on broie, conjointement ou séparément, afin d'obtenir une taille de particules inférieure à 10 mm, lesdits déchets polymèriques, d'une part, et du bitume ou de l'asphalte, d'autre part, qui sont donc respectivement mélangés dans des proportions pondérales de 20 à 95% de déchets polymériques pour de 80 à 5% de bitume ou d'asphalte ; et
- on extrude le mélange de poudres obtenu, par exemple dans une extrudeuse monovis, à une température comprise entre 150 et 300°C, de préférence entre 180 et 250°C, suffisante pour obtenir la fusion de la plupart des constituants, en la présence de 0,5 à 20% en poids, de préférence de 2 à 5% en poids, par rapport au mélange de poudres précédent, d'au moins un polymère compatibilisant, comportant des groupes réactifs, choisi parmi les polyisobutylènes maléinisés, les copolymères d'oléfines et d'anhydride maléïque ou d'acide acrylique, les terpolymères d'oléfines, d'esters insaturés et d'anhydride maléïque ou de méthacrylate de glycidyle et les copolymères séquencés styrène-diène-styrène ou styrène-éthylène/butène-styrène maléinisés, ledit polymère compatibilisant étant ajouté aux déchets polymériques, au bitume ou à l'asphalte, ou à leur mélange.

L'invention a également pour objets les compositions bitumineuses obtenues par ce procédé, et l'emploi de ces compositions bitumineuses comme constituants de bitumes ou d'asphaltes destinés à des applications routieres ou industrielles.

Selon une autre forme de l'invention, le mélange de stériles d'automobiles et le bitume contenant un compatibilisant réactif sont extrudés à une température susmentionnée dans une extrudeuse multizone. Dans la première zone de la vis d'alimentation de l'extrudeuse, on ajoute le mélange de stériles d'automobiles qui est fondu ; le bitume contenant un compatibilisant réactif est ajouté et fondu dans une deuxième zone et, dans une troisième zone, le mélange de polymères et de bitume fondu est malaxé avant sa mise en forme par passage dans la tète d'extrudeuse. La vitesse d'extrusion est variable en fonction de la composition du mélange ; elle est généralement choisie afin d'obtenir, de préférence, un temps de séjour de 0,5 à 3 minutes dans chaque zone de la vis d'alimentation de l'extrudeuse.

Selon une autre forme de l'invention, le mélange de stériles d'automobiles et de bitume ou asphalte contenant un agent compatibilisant réactif est extrudé à une température comprise entre 150 et 250°C et l'extrudat, par exemple en filaments ou en rubans, est mélangé, à chaud, à la sortie de l'extrudeuse avec un flux laminaire ou, de préférence, turbulent de bitume fondu. Les débits de l'extrusion et de l'alimentation en bitume fondu sont réglés de manière à obtenir la teneur désirée en polymères dans le mélange final.

Un avantage majeur de l'addition d'un compatibilisant réactif dans les stériles d'automobiles, selon l'invention, est d'une part la vitesse accrue de dissolution des polymères dans le bitume, ce qui permet des vitesses élevées d'extrusion et d'autre part l'obtention d'un mélange bitumineux final qui possède une homogénéité et des propriétés améliorées.

Le procédé de l'invention peut être avantageusement utilisé pour la fabrication en continu de mélanges bitumineux concentrés en polymères et utilisables ensuite comme additifs de bitumes routiers ou industriels, lors de leur mise en oeuvre.

Les exemples suivants illustrent l'invention

### EXEMPLE 1

7,5 kg de stériles d'automobiles et 0,4 kg de terpolymère à base d'éthylène, d'ester acrylique et d'anhydride maléïque (LOTADER ®, produit ORKEM), sont broyés dans un broyeur à couteaux afin d'obtenir une taille moyenne de particules comprise entre 2 et 4 mm, et mélangés ensuite, dans un mélangeur à poudres, avec 2,5 kg de bitume SAFANIYA, préalablement broyé pour obtenir une taille similaire de particules. Le mélange est introduit dans une extrudeuse monovis et extrudé à 220°C. Durant l'extrusion, la plupart des polymères gonflent ou se dissolvent dans le bitume fondu, ce qui conduit à l'obtention d'un extrudat homogène, par exemple sous la forme d'un ruban ou d'un filament, qui peut ensuite être granulé, stocké et ajouté ultérieurement dans un excès de bitume fondu pour en améliorer les propriétés.

### EXEMPLE 2

5 kg de stériles d'automobiles sont broyés comme dans l'exemple 1 et introduits progressivement dans la première zone de la vis d'alimentation d'une extrudeuse à 190°C. On alimente progressivement une deuxième zone de la vis de l'extrudeuse avec 5 kg de bitume préalablement broyé et contenant 0,3 kg d'un copolymère triséquencé styrène-butadiène-styrène maléinisé. Le mélange fondu de stériles d'automobiles et de bitume contenant un compatibilisant réactif est malaxé en passant dans une troisième zone de la vis d'alimentation de l'extrudeuse chauffée à 210°C. Par passage de l'ensemble dans la tête de l'extrudeuse, on obtient, en continu, une composition bitumineuse concentrée en stériles d'automobiles, d'apparence homogène et qui peut ensuite être rapidement dispersée dans du bitume fondu, à l'état dilué, pour formuler des bitumes routiers ou industriels.

### EXEMPLE 3 (comparatif)

Un mélange de 8 kg de stériles d'automobiles et 0,6 kg de polyisobutylène maléinisé est broyé afin d'obtenir une taille moyenne de particules comprise entre 2 et 4 mm. Le mélange est extrudé à 220°C afin d'obtenir 8 filaments ou rubans de polymères de diamètre ou d'épaisseur voisin de 2 mm. A la sortie de la tête de l'extrudeuse, les filaments ou rubans de polymères sont introduits directement, en continu, dans un courant de bitume fondu à 190°C qui s'écoule à une vitesse de 1,2m/sec. Les débits respectifs de polymères extrudés et de bitume fondu sont réglés de manière à disperser les 8 kg de stériles d'automobiles dans 12 kg de bitume. La plupart des polymères contenus dans les stériles d'automobiles se dissolvent dans le bitume à 190°C en 15 secondes et le mélange d'apparence homogène ainsi obtenu en continu est ensuite refroidi et éventuellement granulé selon une technique conventionnelle.

## Revendications

1. Procédé pour réutiliser des déchets polymériques provenant du déchiquetage et du broyage d'automobiles ou d'appareils ménagers et comprenant des polymères expansés, des mousses, des caoutchoucs vulcanisés, des fibres synthétiques, des polymères thermoplastiques et des résines thermodurcies, par incorporation à des compositions bitumineuses,
ledit procédé étant caractérisé en ce que
- on broie, conjointement ou séparément, afin d'obtenir une taille de particules inférieure à 10 mm, lesdits déchets polymériques et du bitume, ou de l'asphalte, qui sont mélangés en proportions pondérales respectives de 20 à 95% de déchets polymèriques et de 80 à 5% de bitume ou d'asphalte
- et on extrude le mélange de poudres obtenu à une température comprise entre 150 et 300°C en présence d'une proportion de 0,5 à 20% en poids par rapport au mélange précédent, d'au moins un polymère compatibilisant comportant des groupes réactifs, choisi parmi les polyisobutylènes maléinisés, les copolymères d'oléfines et d'anhydride maléïque ou d'acide acrylique, les terpolymères d'oléfines, d'esters insaturés et d'anhydride maléïque ou de méthacrylate de glycidyle et les copolymères séquencés styrène-diène-styrène ou styrène-éthylène/butène-styrène maléinisés", ledit polymère compatibilisant étant ajouté aux déchets polymèriques, au bitume ou à l'asphalte, ou à leur mélange.

2. Procédé selon la revendication 1, caractérisé en ce que les déchets polymériques et le bitume ou l'asphalte sont broyés jusqu'à une taille de particules comprise entre 2 et 4 mm.

3. Procédé selon la revendication 1 et 2, caractérisé par l'emploi d'une extrudeuse multizone, le mélange de polymères étant fondu dans une première zone de la vis d'alimentation de l'extrudeuse, le bitume ou l'asphalte étant fondu dans une deuxième zone et le mélange fondu des polymères et de bitume ou d'asphalte étant malaxé dans une troisième zone avant sa mise en forme par passage dans la tête de l'extrudeuse.

4. Procédé selon l'une des revendications 1 à 3, caractérisé par l'extrusion du mélange de polymères et de bitume ou d'asphalte en filaments ou rubans, qui sont ensuite ajoutés, en continu, dans un flux laminaire ou turbulent de bitume fondu, afin de réaliser un mélange dilué.

5. Procédé selon l'une des revendications 1 à 4, caractérisé en ce que ledit compatibilisant réactif est ajouté à une concentration comprise entre 2 et 5% en poids par rapport au poids du mélange de déchets polymériques et de bitume ou d'asphalte.

6. Composition bitumineuse ayant une homogénéité améliorée et caractérisée en ce qu'elle comprend un mélange de 20 à 95% de déchets polymériques provenant du déchiquetage et du broyage d'automobiles ou d'appareils ménagers et comprenant des polymères expansés, des mousses, des caoutchoucs vulcanisés, des fibres synthétiques, des polymères thermoplastiques et des résines thermodurcies; et de 80 à 5% de bitume ou d'asphalte; lesdits déchets polymériques et ledit bitume étant conjointement ou séparément broyés afin d'obtenir une taille de particules inférieure à 10 mm ; ainsi que, incorporé à ce mélange à titre de compatibilisant réactif au moins un composé polymérique choisi parmi les polyisobutylènes maléinisés, les copolymères d'oléfines et d'anhydride maléïque ou d'acide acrylique, les terpolymères d'oléfines, d'esters insaturés et d'anhydride maléïque ou de méthacrylate de glycidyle et les copolymères séquencés styrène-diène-styrène ou styrène-éthylène/butène-styrène maléinisés ledit polymère compatibilisant étant ajouté aux déchets polymèriques, au bitume ou à l'asphalte, ou à leur mélange d'une proportion de 0,5 à 20 % en poids, ladite composition bitumineuse étant obtenue par un procédé selon l'une des revendications 1 à 5.

7. Emploi d'une composition bitumineuse selon la revendication 6 comme constituant des bitumes ou d'asphaltes destiné à des applications routières ou industrielles.

## Patentansprüche

1. Verfahren zum Wiederverwenden von polymeren Abfällen, die aus dem Schreddern und dem Zerkleinern von Automobilen oder Haushaltsgeräten stammen und expandierte Polymere, Schäume, vulkanisierte Kautschuks, synthetische Fasern, thermoplastische Polymere und wärmeausgehärtete Harze umfassen, durch Einbringung in bituminöse Zusammensetzungen,
wobei das Verfahren dadurch gekennzeichnet ist, daß
- man die polymeren Abfälle und das Bitumen oder den Asphalt, die in entsprechenden Gewichtsverhältnissen von 20 bis 95 % polymerer Abfälle und von 80 bis 5 % Bitumen oder Asphalt gemischt sind, gemeinsam oder getrennt zerkleinert, um eine Partikelgröße kleiner als 10 mm zu erhalten,
- und man die erhaltene Pulvermischung bei einer Temperatur einschließlich zwischen 150 und 300°C in Anwesenheit wenigstens eines kompatibilisierenden Polymers in einem Verhältnis von 0,5 bis 20 Gew.-% in bezug auf die vorhergehende Mischung extrudiert, das reaktive Gruppen umfaßt, welche aus den maleinisierten Polyisobutylenen, den Copolymeren aus Olefinen und aus Maleinsäureanhydrid oder aus Acrylsäure, den Terpolymeren aus Olefinen, ungesättigten Estern und Maleinsäureanyhdrid oder Glycidylmethacrylat, und den maleinisierten Copolymersequenzen Styrol-Dien-Styrol oder Styrol-Ethylen/Buten-Styrol gewählt sind, wobei das kompatibilisierende Polymer den polymeren Abfällen, dem Bitumen oder dem Asphalt oder deren Mischung zugesetzt wird.

2. Verfahren nach Anspruch 1, dadurch gekennzeichnet, daß die polymeren Abfälle und das Bitumen oder der Asphalt bis zu einer Partikelgröße einschließlich zwischen 2 und 4 mm zerkleinert werden.

3. Verfahren nach Anspruch 1 und 2, gekennzeichnet durch die Verwendung eines mehrzonigen Extruders, wobei die Mischung von Polymeren in einer ersten Zone der Zuführschnecke des Extruders geschmolzen werden, das Bitumen oder der Asphalt in einer zweiten Zone geschmolzen werden und die geschmolzene Mischung von Polymeren und von Bitumen oder von Asphalt in einer dritten Zone vor einer Informbringung durch Durchführung durch den Kopf des Extruders gemischt werden.

4. Verfahren nach einem der Ansprüche 1 bis 3, gekennzeichnet durch das Extrudieren der Mischung von Polymeren und von Bitumen oder von Asphalt in Fäden oder Streifen, die dann kontinuierlich einem laminaren oder turbulenten Flux von geschmolzenem Bitumen zugesetzt werden, um eine verdünnte Mischung zu verwirklichen.

5. Verfahren nach einem der Ansprüche 1 bis 4, dadurch gekennzeichnet, daß das reaktive Kompatibilisierungsmittel mit einer Konzentration einschließlich zwischen 2 und 5 Gew.-% in bezug auf das Gewicht der Mischung von polymeren Abfällen und von Bitumen oder von Asphalt zugesetzt wird.

6. Bituminöse Zusammensetzung, die eine verbesserte Homogenität aufweist und dadurch gekennzeichnet ist, daß sie eine Mischung von 20 bis 95 % polymerer Abfälle, die aus dem Schreddern und dem Zerkleinern von Automobilen oder Haushaltsgeräten stammen und expandierte Polymere, Schäume, vulkanisierte Kautschuks, synthetische Fasern, thermoplastische Polymere und wärmeausgehärtete Harze umfassen, sowie von 80 bis 5 % Bitumen oder von Asphalt, wobei die polymeren Abfälle und das Bitumen gemeinsam oder getrennt zerkleinert werden, um eine Partikelgröße kleiner als 10 mm zu erhalten, sowie in diese Mischung als reaktives Kompatibilisierungsmittel eingebracht wenigstens eine polymere Verbindung, die aus den maleinisierten Polyisobutylenen, den Copolymeren aus Olefinen und aus Maleinsäureanhydrid oder aus Acrylsäure, den Terpolymeren aus Olefinen, ungesättigten Estern und Maleinsäureanyhdrid oder Glycidylmethacrylat, und den maleinisierten Copolymersequenzen Styrol-Dien-Styrol oder Styrol-Ethylen/Buten-Styrol ausgewählt sind, wobei das kompatibilisierende Polymer den polymeren Abfällen, dem Bitumen oder dem Asphalt oder deren Mischung in einem Verhältnis von 0,5 bis 20 Gew.-% zugesetzt wird, umfaßt, wobei die bituminöse Zusammensetzung durch ein Verfahren gemäß einem der Ansprüche 1 bis 5 erhalten wird.

7. Verwendung einer bituminösen Zusammensetzung gemäß Anspruch 6, als Bestandteil von Bitumen oder Asphalten, die für Straßen- oder Industrieanwendungen bestimmt sind.

## Claims

1. A process for reusing waste polymers resulting from crushing and grinding of cars or domestic appliances and comprising expanded polymers, foams, vulcanized rubbers, synthetic fibres, thermoplastic polymers and thermoset resins, by incorporation in bituminous compositions, said process being characterized in that
- said waste polymers and bitumen or asphat are jointly or separately ground, in order to obtain a particle size below 10 mm, in respective weight proportions from 20 to 95 % of waste polymers and from 80 to 5 % of bitumen or asphalt,
- and the powder mixture obtained is extruded at a temperature between 150 and 300° C in the presence of a proportion from 0.5 to 20 % by weight based on the weight of said miture, of at least a compatibilizing polymer containing reactive groups and selected from maleinized polyisobutylenes, copolymers of olefins and maleic anhydride or acrylic acid, terpolymers of olefins, usaturated esters and maleic anhydride or glycidyl methacrylate and maleinized styrene-diene-styrene or styrene-ethylene/butylene-styrene block copolymers, said compatibilizing polymer being added to the waste polymers, to bitumen or asphalt, or to their mixture.

2. Process according to claim 1, characterized in that the waste polymers and the bitumen or asphalt are ground to a particle size between 2 and 4 mm.

3. Process according to claims 1 or 2, characterized by the use of a multi-zone extruder, the polymer mixture being melted in a first zone of the extruder feed screw, the bitumen or asphalt being melted in a second zone and the melted mixture of polymers and bitumen or asphalt is kneaded in a third zone prior to its shaping by passing into the extrusion head.

4. Process acccording to any one of the claims 1 to 3, characterized by the extrusion of the mixture of polymers and bitumen or asphalt in the form of filaments or ribbons, which are then continuously added to a laminar or turbulent melted bitumen flow, in order to obtain a dilute mixture.

5. Process according to any one of the claims 1 to 4, characterized in that the said reactive compatibilizing agent is added with a concentration between 2 and 5 % by weight, based on the weight of the mixture of waste polymers and bitumen or asphalt.

6. Bituminous composition having an improved homogeneity and characterized in that it comprises a mixture of 20 to 95 % of waste polymers resulting from crushing and grinding of cars or domestic appliances and comprising particularly expanded polymers, foams, vulcanized rubbers, synthetic fibres, thermoplastic polymers and thermoset resins, and 80 to 5 % by weight of bitumen or asphalt, said waste polymers and bitumen or asphalt being jointly or separately ground, in order to obtain a particle size below 10 mm ; as well as, incorporated in this mixture as a reactive compatibilizing agent, at least a polymer compound selected from maleinized polyisobutylenes, copolymers of olefins and maleic anhydride or acrylic acid, terpolymers of olefins, usaturated esters and maleic anhydride or glycidyl methacrylate and maleinized styrene-diene-styrene or styrene-ethylene/butylene-styrene block copolymers, said compatibilizing polymer being added to the waste polymers, to bitumen or asphalt, or to their mixture, in a proportion from 0.5 to 20 % by weight, said composition being obtained by a process according to one of claims 1 to 5.

7. Use of a bituminous composition according to claim 6 as constituent of bitumens or asphalts intended for use in road-making or industry.
